# EUROPÄISCHE PATENTANMELDUNG

(11) **EP 2 796 864 A1**
(43) Veröffentlichungstag der Anmeldung: **29.10.2014**
(21) Anmeldenummer: 14154259.7
(22) Anmeldetag: 07.02.2014
(51) Int. Cl.: G01N 23/223

(54) **Verfahren zur Identifizierung einer Gummimischung bei der Herstellung von Reifenbauteilen aus unvulkanisiertem Gummimaterial**

(30) Priorität: 25.04.2013 DE 102013104181
(71) Anmelder: Continental Reifen Deutschland GmbH, 30165 Hannover (DE)
(72) Erfinder: Lacayo-Pineda, Jorge, 31535 Neustadt (DE); du Bois, Andre, 30657 Hannover (DE); Pavlinek, Vladimir, 76502 Otrokovice (CZ); Cermak, Roman, 76001 Zlin (CZ)
(74) Vertreter: Widjaja, Wira

(57) **Zusammenfassung**

Um ein Verfahren zur Identifizierung einer Gummimischung zu schaffen, mit dem Gummimischungen auf einfache Weise identifiziert werden können, um sie nachfolgend einem bestimmten Herstellungsprozess für Reifenbauteile zuzuführen, wird folgendes Verfahren mit folgenden Schritten vorgeschlagen:
a) Bereitstellen einer Gummimischung (4) mit unterschiedlichen Mischungsbestandteilen (4),
b) Positionierung eines Röntgenfluoreszenzgerätes (1),
wobei das Röntgenfluoreszenzgerät (1) auf die Oberfläche der Gummimischung (4) gerichtet wird,
c) Bestrahlung der Oberfläche der Gummimischung (4) mit Röntgenstrahlung (2) aus dem Röntgenfluoreszenzgerät (1),
wobei eine charakteristische Fluoreszenzstrahlung (3) in der Gummimischung induziert wird,
d) Empfangen und Auswerten der Fluoreszenzstrahlung (3) mit dem Röntgenfluoreszenzgerät (1),
e) Identifizierung von speziellen Mischungsbestandteilen mit dem Röntgenfluoreszenzgerät (1),
f) Vergleich der identifizierten Mischungsbestandteile mit vorgegebenen Mischungsbestandteilen,
wobei die vorgegebenen Mischungsbestandteile durch die Mischungsspezifikation des herzustellenden Reifenbauteiles festgelegt sind,
g) Optionale Aktivierung eines Warnsignales mit dem Röntgenfluoreszenzgerät (1), wenn eine signifikante Abweichung zwischen den gemessenen Mischungsbestandteilen und den vorgegebenen Mischungsbestandteilen identifiziert wird.

## Beschreibung

Die Erfindung betrifft ein Verfahren zur Identifizierung einer Gummimischung bei der Herstellung von Reifenbauteilen aus unvulkanisiertem Gummimaterial.

Z.B. bei der Reifenherstellung werden spezielle Gummimischungen eingesetzt, die mit einem Mischer hergestellt werden und dann im Allgemeinen zwischengelagert werden. Die unterschiedlichen Gummimischungen werden anschließend mit Papierdatenblättern gekennzeichnet, damit sie anschließend der korrekten Weiterverarbeitung zugeführt werden können. Die vorkonfektionierten Bauteile für z.B. Fahrzeugreifen werden beispielsweise mit speziellen Extrudern hergestellt, wobei sichergestellt werden muss, dass der Extruder mit der korrekten Gummimischung bestückt wird. Es muss daher sichergestellt werden, dass dem Extruder immer die vorher spezifizierte Gummimischung zugeführt wird, damit das Bauteil beim fertigen Produkt die vorgegebenen Eigenschaften besitzt. Das gleiche gilt beim Kalanderprozess, mit dem ebenfalls unterschiedliche Bauteile hergestellt werden.

Der Erfindung liegt die Aufgabe zugrunde, ein Verfahren zu schaffen, mit dem Gummimischungen auf einfache Weise identifiziert werden können, um sie nachfolgend einem bestimmten Herstellungsprozess für Bauteile zuzuführen.

Gelöst wird die Aufgabe gemäß Anspruchs 1 mit einem Verfahren mit folgenden Schritten:
a) Bereitstellen einer Gummimischung mit unterschiedlichen Mischungsbestandteilen,
b) Positionierung eines Röntgenfluoreszenzgerätes,
   wobei das Röntgenfluoreszenzgerät auf die Oberfläche des Gummimaterials gerichtet wird,
c) Bestrahlung der Oberfläche des Gummimaterials mit Röntgenstrahlung,
   wobei durch die Anregung Röntgenstrahlung emittiert wird, die für die Elementzusammensetzung charakteristisch ist,
d) Empfangen und Auswerten einer Fluoreszenzstrahlung mit dem Röntgenfluoreszenzgerät,
e) Identifizierung von speziellen Mischungsbestandteilen mit dem Röntgenfluoreszenzgerät,
f) Vergleich der identifizierten Mischungsbestandteile mit vorgegebenen Mischungsbestandteilen,
   wobei die vorgegebenen Mischungsbestandteile durch die Mischungsspezifikation des herzustellenden Bauteiles festgelegt sind,
g) Optionale Aktivierung eines Warnsignales mit dem Röntgenfluoreszenzgerät, wenn eine signifikante Abweichung zwischen den gemessenen Mischungsbestandteilen und den vorgegebenen Mischungsbestandteilen identifiziert wird.

Ein Vorteil der Erfindung ist insbesondere darin zu sehen, dass durch das Verfahren auf einfache Weise eine schnelle Identifizierung von Gummimischungen erfolgt, um sie nachfolgend einem bestimmten Herstellungsprozess für Bauteile zuzuführen. Außerdem ist ein großer Vorteil des Verfahrens, dass die Messung mit dem Röntgenfluoreszenzgerät kontaktlos durchgeführt werden kann, wodurch die gesamte Prozessgeschwindigkeit zur Herstellung von Bauteilen nicht beeinträchtigt wird. Bei diesem Messverfahren erfolgt die Identifizierung der einzelnen wichtigen Mischungsbestandteile ebenfalls mit einer sehr hohen Genauigkeit. Dadurch kann eine versehentliche Verwechslung von Gummimischungen nahezu ausgeschlossen werden. Außerdem wird bei einer Identifizierung einer falschen oder stark verunreinigten Gummimischung direkt und automatisch ein Warnsignal ausgelöst. Dadurch wird sichergestellt, dass dem Extruder oder dem Kalander zu keinem Zeitpunkt eine falsche oder stark verunreinigte Gummimischung zugeführt wird.

In einer vorteilhaften Ausführung der Erfindung ist vorgesehen, dass bei Schritt a) das Bereitstellen der Gummimischung mit unterschiedlichen Mischungsbestandteilen bei einem kontinuierlichen Prozess erfolgt, wobei das Gummimaterial in Form einer Materialbahn kontinuierlich an dem Röntgenfluoreszenzgerät vorbei geführt wird.

So kann das Messverfahren auf einfache Weise und automatisiert durchgeführt werden.

In einer weiteren vorteilhaften Ausführung der Erfindung ist vorgesehen, dass das Röntgenfluoreszenzgerät direkt vor einem Extruder oder einem Kalander positioniert ist. Dadurch wird sichergestellt, dass dem Extrusionsprozess oder dem Kalanderprozess immer die korrekte Gummimischung zugeführt wird. Bei diesen Herstellungsprozessen ist im Allgemeinen eine hohe Qualitätssicherung von Bedeutung.

In einer weiteren vorteilhaften Ausführung der Erfindung ist vorgesehen, dass bei Schritt c) und d) das Röntgenfluoreszenzgerät für eine kurze Zeit mit der sich bewegenden Materialbahn mitbewegt wird, wodurch das Gummimaterial für mindestens eine Sekunde quasi-statisch der Röntgenstrahlung ausgesetzt wird.
Dadurch können einzelne Mischungsbestandteile mit einer hohen Genauigkeit identifiziert werden.

In einer weiteren vorteilhaften Ausführung der Erfindung ist vorgesehen, dass bei Schritt e) mit dem Röntgenfluoreszenzgerät zumindestens die Mischungsbestandteile Silizium, Kobalt, Halogene, Schwefel und Zink sowie deren relativer Anteil in der Mischung identifiziert werden können.
Diese Mischungsbestandteile sind für Gummimischungen für Fahrzeugreifen von hoher Bedeutung. Mit dem Röntgenfluoreszenzgerät lassen sich diese Bestandteile überraschenderweise mit einer hohen Genauigkeit identifizieren.

In einer weiteren vorteilhaften Ausführung der Erfindung ist vorgesehen, dass das Röntgenfluoreszenzgerät in Form eines Handgerätes ausgebildet ist, wobei mit dem Handgerät die auf Paletten bereitgestellten Gummimischungen kontrolliert werden können. Dadurch lassen sich die auf Paletten bereitgestellten Gummimischungen auf einfache Weise kontrollieren.

In einer weiteren vorteilhaften Ausführung der Erfindung ist vorgesehen, dass das Röntgenfluoreszenzgerät vor dem Eingangsbereich zu einem Mischer positioniert ist, wobei mit dem Röntgenfluoreszenzgerät das dem Mischer zugeführte Rohmaterial kontrolliert wird.
Das Messverfahren mit dem Röntgenfluoreszenzgerät lässt sich ebenfalls bei der Mischungsherstellung auf einfache Weise einsetzen. Die dem Mischer zugeführten Rohmaterialien werden vorab mit dem Röntgenfluoreszenzgerät kontrolliert, um diese anschließend dem Mischer zuzuführen.

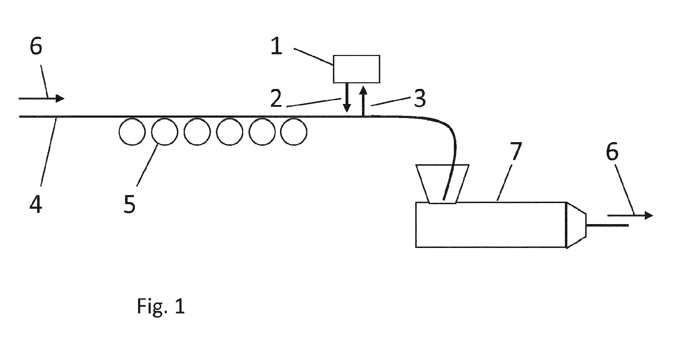

Anhand eines Ausführungsbeispiels soll die Erfindung näher erläutert werden. Es zeigt: Fig. 1: ein Ausführungsbeispiel für das Verfahren.

Es wird eine Seitansicht des Verfahrens dargestellt, bei dem die Gummimischung 4 in Form einer Materialbahn einem Extruder 7 zugeführt wird. Es handelt sich beispielsweise um einen Laufstreifen-Extruder, mit dem Laufstreifen für Fahrzeugreifen hergestellt werden. Die Gummimischung 4 wird über eine Fördervorrichtung 5 zum Extruder 7 gefördert. Die Fördervorrichtung 5 transportiert die Materialbahn in Förderrichtung 6. Oberhalb der Gummimischung 4 ist ein Röntgenfluoreszenzgerät 1 angeordnet, der eine Bestrahlung 2 in Richtung der Gummimischung 4 aussendet. Die Bestrahlung 2 induziert die Fluoreszenzstrahlung 3 in der Gummimischung 4. Die charakteristische Strahlung 3 wird durch das Röntgenfluoreszenzgerät 1 gemessen, wobei anschließend eine Elementanalyse automatisiert durchgeführt wird. Über diese Elementanalyse lassen sich eine Reihe von Mischungsbestandteilen identifizieren. Anschließend erfolgt ein Vergleich der identifizierten Mischungsbestandteile mit vorgegebenen Mischungsbestandteilen, die durch die Mischungsspezifikation des herzustellenden Bauteiles festgelegt sind. Wenn bei diesem Vergleich eine falsche oder stark verunreinigte Gummimischung identifiziert wird, wird der Herstellungsprozess direkt gestoppt, so dass dem Extruder 7 keine Gummimischung mehr zugeführt wird. Das Röntgenfluoreszenzgerät 1 wird bei der Messung für kurze Zeit in Förderrichtung 6 mitgeführt, um dadurch die Messgenauigkeit zu erhöhen.

### Bezugszeichenliste

### (ist Teil der Beschreibung)

- 1: Röntgenfluoreszenzgerät
- 2: Röntgenstrahlung aus dem Röntgenfluoreszenzgerät
- 3: Charakteristische Fluoreszenzstrahlung aus dem Material
- 4: Gummimaterial bzw. Gummimischung in Form einer Materialbahn
- 5: Fördervorrichtung für Gummimischung
- 6: Förderrichtung
- 7: Extruder

## Patentansprüche

1. Verfahren zur Identifizierung einer Gummimischung (4) bei der Herstellung von Reifenbauteilen aus unvulkanisiertem Gummimaterial mit folgenden Schritten:
a) Bereitstellen einer Gummimischung (4) mit unterschiedlichen Mischungsbestandteilen (4),
b) Positionierung eines Röntgenfluoreszenzgerätes (1),
wobei das Röntgenfluoreszenzgerät (1) auf die Oberfläche der Gummimischung (4) gerichtet wird,
c) Bestrahlung der Oberfläche der Gummimischung (4) mit Röntgenstrahlung aus dem Röntgenfluoreszenzgerät (1),
wobei eine charakteristische Fluoreszenzstrahlung in der Gummimischung induziert wird,
d) Empfangen und Auswerten der induzierten Fluoreszenzstrahlung (3) mit dem Röntgenfluoreszenzgerät (1),
e) Identifizierung von speziellen Mischungsbestandteilen mit dem Röntgenfluoreszenzgerät (1),
f) Vergleich der identifizierten Mischungsbestandteile mit vorgegebenen Mischungsbestandteilen,
wobei die vorgegebenen Mischungsbestandteile durch die Mischungsspezifikation des herzustellenden Bauteiles festgelegt sind,
g) Optionale Aktivierung eines Warnsignales mit dem Röntgenfluoreszenzgerät (1), wenn eine signifikante Abweichung zwischen den gemessenen Mischungsbestandteilen und den vorgegebenen Mischungsbestandteilen identifiziert wird.

2. Verfahren nach Anspruch 1,
**dadurch gekennzeichnet, dass**
bei Schritt a) das Bereitstellen der Gummimischung (4) mit unterschiedlichen Mischungsbestandteilen bei einem kontinuierlichen Prozess erfolgt,
wobei die Gummimischung (4) in Form einer Materialbahn kontinuierlich an dem Röntgenfluoreszenzgerät (1) vorbei geführt wird.

3. Verfahren nach einem der vorhergehenden Ansprüche,
**dadurch gekennzeichnet, dass**
das Röntgenfluoreszenzgerät (1) direkt vor einem Extruder (7) oder einem Kalander positioniert ist.

4. Verfahren nach einem der vorhergehenden Ansprüche,
**dadurch gekennzeichnet, dass**
bei Schritt c) und d) das Röntgenfluoreszenzgerät (1) für eine kurze Zeit mit der sich bewegenden Materialbahn (4) mitbewegt wird, wodurch das Gummimaterial (4) für mindestens eine Sekunde der Bestrahlung (2) des Röntgenfluoreszenzgerätes (4) ausgesetzt wird.

5. Verfahren nach einem der vorhergehenden Ansprüche,
**dadurch gekennzeichnet, dass**
bei Schritt e) mit dem Röntgenfluoreszenzgerät (4) zumindestens die Mischungsbestandteile Silizium, Kobalt, Halogene, Schwefel und Zink sowie deren relativer Anteil in der Mischung identifiziert werden können.

6. Verfahren nach einem der vorhergehenden Ansprüche,
**dadurch gekennzeichnet, dass**
das Röntgenfluoreszenzgerät in Form eines Handgerätes ausgebildet ist,
wobei mit dem Handgerät die auf Paletten bereitgestellten Gummimischungen kontrolliert werden können.

7. Verfahren nach einem der vorhergehenden Ansprüche,
**dadurch gekennzeichnet, dass**
das Röntgenfluoreszenzgerät vor dem Eingangsbereich zu einem Mischer positioniert ist,
wobei mit dem Röntgenfluoreszenzgerät das dem Mischer zugeführte Rohmaterial kontrolliert wird.
